# EUROPEAN PATENT APPLICATION

(11) **EP 4 804 729 A1**
(43) Date of publication of application: **09.09.2026**
(21) Application number: 26151713.0
(22) Date of filing: 14.01.2026
(51) Int. Cl.: H05B 45/10, G01J 3/00, H05B 45/12, H05B 45/20, H05B 45/22, H05B 45/28, H05B 47/105

(54) **MULTI-SPECTRAL INTEGRATED COB LIGHT SOURCE AND CONTROL SYSTEM THEREOF**

(30) Priority: 03.03.2025 CN 202510241344
(71) Applicant: Foshan Cicada Dental Instrument Co., Ltd., Foshan, Guangdong 528226 (CN)
(72) Inventor: Yao, Xiao, Foshan, 528226 (CN)
(74) Representative: Metida

(57) **Abstract**

Provided are a multi-spectral integrated Chip-on-Board (COB) light source and a control system thereof, relating to the technical field of lighting. The COB light source includes light-emitting diodes. The light-emitting diodes are light sources of different wavelengths, including ultraviolet light, blue light and red light. The light-emitting diodes are uniformly arranged on a double-sided ceramic circuit board in a ring shape. A current output of the multi-spectral integrated COB light source is adjusted by an intelligent control module. The intelligent control module adjusts a current output of the light-emitting diode according to real-time sensor data to adjust brightness and color temperature of the light source. The control system includes: a sensor module, which is configured to acquire environmental light intensity and temperature and humidity data; a signal processing module, which is configured to process the sensor data; and an optimization calculation unit, which is configured to generate an adjustment signal according to the processed data. By using a technical solution of combining the multi-spectral integrated COB light source with the intelligent control module, the brightness and the color temperature of the light source are accurately controlled.

## Description

### TECHNICAL FIELD

The present disclosure relates to the technical field of lighting, and in particular, to a multi-spectral integrated Chip-on-Board (COB) light source and a control system thereof.

### BACKGROUND

With the progress of science and technology and increasing requirements for environmental control, a lighting system plays an important role in many fields, and especially in applications such as plant growth, indoor lighting and stage lighting, accurate light source control becomes particularly important. A conventional lighting system often provides light through a light source of a single wavelength. However, with improvement of lighting quality requirements, a light source of a single wavelength cannot meet requirements of different application scenarios. In order to better meet various requirements, a multi-spectral integrated Chip-on-Board (COB) light source has gradually become an important alternative in the modem lighting technology.

At present, many modern lighting systems have begun to use a multi-spectral light source, in which an integrated chip (COB) light source is widely used because of high light efficiency and a long service life. These light sources can provide light with a plurality of wavelengths at the same time to meet different lighting requirements. However, although the multi-spectral light source has specific advantages in control of brightness and color temperature, a conventional control system usually relies on a fixed current output or a single control algorithm, and cannot make timely adjustment according to changes of environmental conditions, so that system performance cannot be fully exerted in a complex environment.

An existing control system of a multi-spectral light source usually has several disadvantages. First, most of the conventional control systems use a fixed current or a simple manual adjustment method, and cannot flexibly adjust the output of the light source according to real-time environmental changes, so that the brightness and the color temperature of the light source cannot accurately match application requirements. Second, a conventional system often lacks accurate adjustment means in terms of power distribution between light sources of different wavelengths, so that a cooperative operation effect among light sources of various wavelengths is unsatisfactory, and overall energy efficiency of light sources cannot be maximized. Finally, the existing systems generally do not take into account an optimization problem of energy efficiency in long-term use. It is difficult to give consideration to high energy efficiency and a long service life of light sources, and this problem is particularly prominent especially in large-scale applications.

### SUMMARY

Aiming at the disadvantages of the prior art, the present disclosure provides a multi-spectral integrated Chip-on-Board (COB) light source and a control system thereof, solving the problems that energy efficiency of a light source is low and energy efficiency management is poor because an existing control system of a multi-spectral light source cannot adjust a current of the light source in real time according to environmental changes.

To achieve the aforementioned objectives, the present disclosure is realized through the following technical solutions. A multi-spectral integrated Chip-on-Board (COB) light source, comprising light-emitting diodes, wherein the light-emitting diodes are light sources of different wavelengths, comprising ultraviolet light, blue light and red light, the light-emitting diodes are uniformly arranged on a double-sided ceramic circuit board in a ring shape, a current output of the multi-spectral integrated COB light source is adjusted by an intelligent control module, and the intelligent control module adjusts a current output of the light-emitting diode according to real-time sensor data to adjust brightness and color temperature of the light source.

The present disclosure further provides a control system of a multi-spectral integrated Chip-on-Board (COB) light source, wherein the control system comprises:
a sensor module, which is configured to acquire environmental light intensity and temperature and humidity data;
a signal processing module, which is configured to process the sensor data;
an optimization calculation unit, which is configured to generate an adjustment signal according to the processed data;
a feedback control unit, which is configured to adjust a current output of the multi-spectral integrated COB light source according to the adjustment signal; and
an intelligent control module, which comprises a quantum optical control unit, wherein the quantum optical control unit adjusts an output power of a light source of each wavelength by adjusting a phase difference of the light sources of different wavelengths.

Preferably, the signal processing module comprises a data preprocessing unit and a Bayesian adaptive algorithm unit,
the data preprocessing unit is configured to filter and normalize the sensor data, and
the Bayesian adaptive algorithm unit updates probability distribution of a system state in real time according to the processed data to generate an adjustment signal.

Preferably, the optimization calculation unit calculates a current output of the light source according to an optimization control algorithm, and the optimization control algorithm performs current adjustment based on an objective function of minimizing power consumption and meeting requirements of light color and brightness.

Preferably, the optimization calculation unit is configured to perform the following steps:
generating a constraint condition based on a preset light color parameter and a brightness parameter; and
taking minimizing power consumption as the objective function, solving an optimal current value of the light source of each wavelength by using a Lagrange multiplier method.

Preferably, a light source service life attenuation factor is introduced into the objective function, and the attenuation factor is associated with current intensity and temperature and humidity data.

Preferably, the feedback control unit comprises a fuzzy control module and a Proportional-Integral-Derivative (PID) control module,
the fuzzy control module generates a preliminary adjustment signal based on sensor data, and
the PID control module performs dynamic compensation on the preliminary adjustment signal.

Preferably, a proportional coefficient, integral time and derivative time of the PID control module are adjusted by using an adaptive algorithm, and are automatically adjusted according to temperature and humidity of an actual operating environment and sensor data to ensure stability of the system and a long-term stable output of the light source.

Preferably, the quantum optical control unit comprises:
a phase modulator, which is configured to adjust a phase difference of light sources of different wavelengths;
a quantum interference detection unit, which is configured to monitor interference intensity of a light source of each wavelength; and
a power divider, which is configured to adjust an output power of a light source of each wavelength based on the interference intensity.

Preferably, the sensor module comprises:
a spectral sensor, which is configured to monitor spectral distribution of environmental light at a sampling frequency of 10 times per second;
distributed temperature sensors, which are uniformly distributed along an edge of a double-sided ceramic circuit board; and
a humidity sensor, which is integrated in a light source housing.

The present disclosure provides a multi-spectral integrated COB light source and a control system thereof. The present disclosure has the following beneficial effects:
1. By using a technical solution of combining the multi-spectral integrated COB light source with the intelligent control module, the present disclosure accurately controls the brightness and the color temperature of the light source. Compared with a light source control system with a fixed current output in the prior art, the present disclosure can dynamically adjust the current of the light source according to environmental changes, which not only improves adaptability of the light source, but also avoids the problem that the conventional system cannot respond to environmental changes in real time.
2. By introducing a quantum optical control unit to adjust a phase difference of light sources of different wavelengths, the present disclosure accurately allocates power. Compared with a method of adjusting power only by a current in the prior art, a quantum optical control solution of the present disclosure can optimize energy efficiency of a light source, so that light sources of different wavelengths can operate cooperatively, and overall energy efficiency of the light sources is significantly improved.
3. The present disclosure uses a technical solution that a feedback control unit combines a Proportional-Integral-Derivative (PID) control algorithm and a fuzzy control algorithm to achieve efficient feedback adjustment in a complex environment. Compare with a single control method in a conventional technology, a feedback mechanism of the present disclosure can quickly respond to environmental changes and dynamically adjust a parameter of a light source, thereby avoiding the problem that slow control results in unstable performance.
4. The present disclosure achieves efficient energy management in various application scenarios through an adaptive adjustment mechanism and a historical data prediction function. Compared with a fixed-mode energy efficiency management method in the prior art, the present disclosure can optimize a current output according to different operating conditions, minimize power consumption, and prolong a service life of a light source at the same time, thereby solving the problem that a conventional system cannot give consideration to both efficiency and a service life.

### BRIEF DESCRIPTION OF THE DRAWINGS

FIG. 1 is a schematic diagram of a front structure according to the present disclosure;
FIG. 2 is a schematic diagram of a back structure according to the present disclosure; and
FIG. 3 is a schematic diagram of a main frame according to the present disclosure.

### DETAILED DESCRIPTION OF THE EMBODIMENTS

In the following, the technical solution in the embodiment of the present disclosure will be clearly and completely described with reference to the drawings in the embodiment of the present disclosure. Obviously, the described embodiments are only some embodiments of the present disclosure, rather than all of the embodiments. Based on the embodiments in the present disclosure, all other embodiments obtained by those skilled in the art without paying creative labor belong to the scope of protection of the present disclosure.

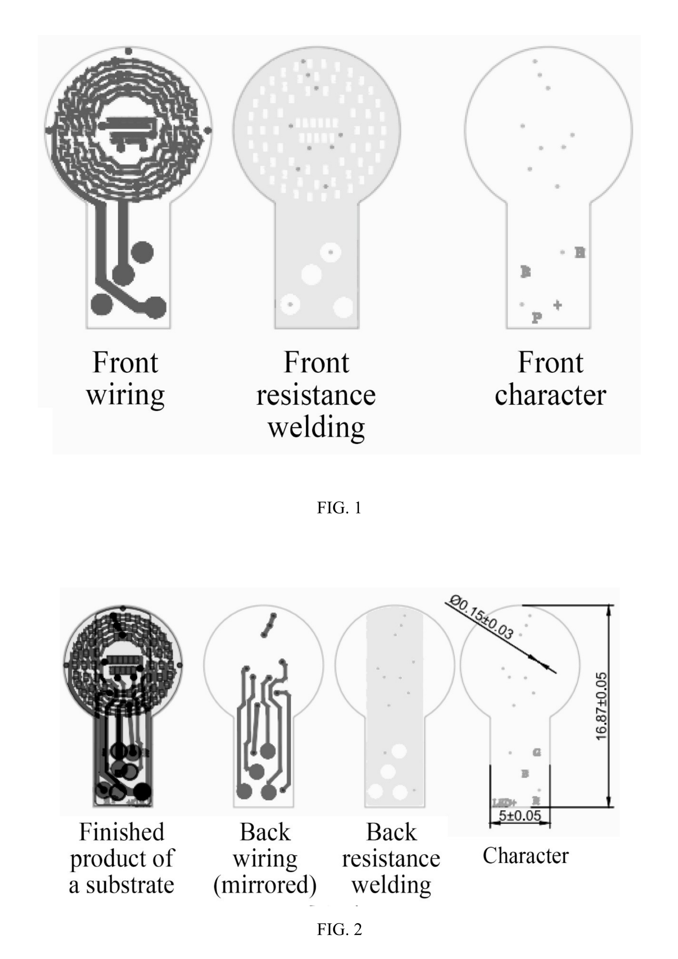

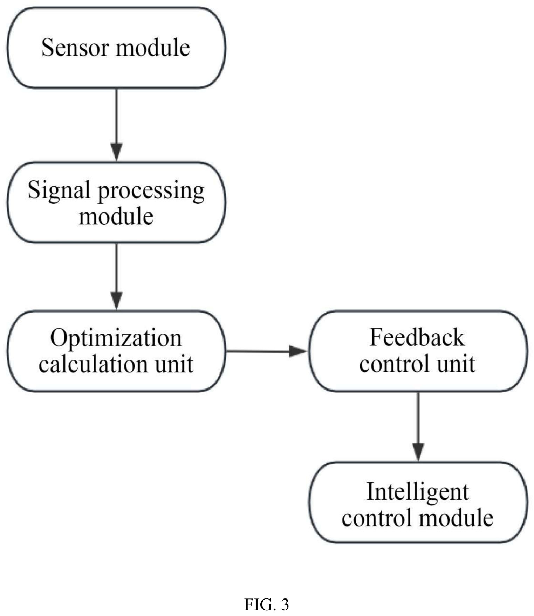

With reference to FIG. 1 to FIG. 3, an embodiment of the present disclosure provides a multi-spectral integrated Chip-on-Board (COB) light source, including light-emitting diodes. The light-emitting diodes are light sources of different wavelengths, including ultraviolet light, blue light and red light. The light-emitting diodes are uniformly arranged on a double-sided ceramic circuit board in a ring shape. A current output of the multi-spectral integrated COB light source is adjusted by an intelligent control module. The intelligent control module adjusts a current output of the light-emitting diode according to real-time sensor data to adjust brightness and color temperature of the light source.

The multi-spectral integrated COB light source of this embodiment includes a plurality of light-emitting diodes (LEDs) with different wavelengths, mainly including light sources of three wavelengths: ultraviolet light, blue light and red light. In order to achieve a more efficient lighting effect, these light-emitting diodes are uniformly arranged on a double-sided ceramic circuit board, forming a ring-shaped arrangement. This design not only effectively improves heat dissipation efficiency of the light-emitting diodes, but also allows an overall power output of the light source to be uniformly distributed.

In practical use, the brightness and the color temperature of the COB light source are crucial. In order to meet different lighting requirements (for example, plant growth, indoor lighting, and the like), the light source designs a set of intelligent control modules. The control module can adjust a current output of each LED according to the environmental data (such as light intensity, temperature, humidity, and the like) acquired in real time. The adjustment mechanism enables the light source to automatically adapt to environmental changes while ensuring energy conversation, thereby maintaining an optimal lighting effect.

Through the intelligent control module, users can set the required brightness and color temperature through a preset control program. The module may calculate an optimal current output according to these parameters, so as to ensure that the light-emitting diode always maintains an optimal operating state. This not only can save energy, but also can effectively prolong a service life of the LED.

Each LED emits light with a specific wavelength according to the current output provided. In this design, the wavelengths of ultraviolet light, blue light and red light are accurately controlled within a specific range to meet different lighting requirements. For example, ultraviolet light may be used to enhance photosynthesis of plants, blue light helps to promote plant growth, and red light is crucial for plant flowering and fruiting. Through the multi-wavelength combination, the present disclosure can provide more comprehensive and balanced light and adapt to various different application scenarios.

The control module changes brightness of the light source of each wavelength in real time by adjusting the current output of each LED. The adjustment is based on the environmental feedback. For example, if the environmental light gets dark, the control system may automatically increase the current output of the light-emitting diode to keep the brightness and color temperature of the light source within a set range. The intelligent control module makes decisions through the real-time data acquired by the sensor module. These sensors can capture information such as temperature, humidity and light intensity around the light source to ensure that the light source can always play an optimal role in different environments.

In order to ensure the long-term stable operation of the light source, this design uses a double-sided ceramic circuit board. Ceramic material is very high in thermal conductivity, thereby effectively conducting heat generated when the LED operates quickly and avoiding an influence of heat accumulation on light source performance of the LED. Temperature control on the surface of the light source is crucial for prolonging the service life, especially during high-power operation. A heat dissipation design of double-sided ceramics can ensure that the light source can still operate at a low temperature even during operation for a long time and with a high load, thereby avoiding failure and a shortened service life due to overheating.

The present disclosure further provides a control system of a multi-spectral integrated Chip-on-Board (COB) light source, where the control system includes:
a sensor module, which is configured to acquire environmental light intensity and temperature and humidity data;
a signal processing module, which is configured to process the sensor data;
an optimization calculation unit, which is configured to generate an adjustment signal according to the processed data;
a feedback control unit, which is configured to adjust a current output of the multi-spectral integrated COB light source according to the adjustment signal; and
an intelligent control module, which includes a quantum optical control unit, where the quantum optical control unit adjusts an output power of a light source of each wavelength by adjusting a phase difference of the light sources of different wavelengths.

The signal processing module includes a data preprocessing unit and a Bayesian adaptive algorithm unit,
the data preprocessing unit is configured to filter and normalize the sensor data, and
the Bayesian adaptive algorithm unit updates probability distribution of a system state in real time according to the processed data to generate an adjustment signal.

The optimization calculation unit calculates a current output of the light source according to an optimization control algorithm, and the optimization control algorithm performs current adjustment based on an objective function of minimizing power consumption and meeting requirements of light color and brightness.

The optimization calculation unit is configured to perform the following steps:
generating a constraint condition based on a preset light color parameter and a brightness parameter; and
taking minimizing power consumption as the objective function, solving an optimal current value of the light source of each wavelength by using a Lagrange multiplier method.

A light source service life attenuation factor is introduced into the objective function, and the attenuation factor is associated with current intensity and temperature and humidity data.

The feedback control unit includes a fuzzy control module and a Proportional-Integral-Derivative (PID) control module,
the fuzzy control module generates a preliminary adjustment signal based on sensor data, and
the PID control module performs dynamic compensation on the preliminary adjustment signal.

A proportional coefficient, integral time and derivative time of the PID control module are adjusted by using an adaptive algorithm, and are automatically adjusted according to temperature and humidity of an actual operating environment and sensor data to ensure stability of the system and a long-term stable output of the light source.

The quantum optical control unit includes:
a phase modulator, which is configured to adjust a phase difference of light sources of different wavelengths;
a quantum interference detection unit, which is configured to monitor interference intensity of a light source of each wavelength; and
a power divider, which is configured to adjust an output power of a light source of each wavelength based on the interference intensity.

The sensor module includes:
a spectral sensor, which is configured to monitor spectral distribution of environmental light at a sampling frequency of 10 times per second;
distributed temperature sensors, which are uniformly distributed along an edge of a double-sided ceramic circuit board; and
a humidity sensor, which is integrated in a light source housing.

The sensor module in this embodiment is configured to acquire and monitor key parameters of the environment where the multi-spectral integrated COB light source is located, so as to provide necessary data support for subsequent signal processing and optimization calculation. A core function of the sensor module is to monitor data such as environmental light intensity, temperature and humidity in real time and transmit these data to each module of the control system. Through the feedback of these environmental parameters, the control system can dynamically adjust the current output of the light source, optimize operation efficiency and performance of the light source, and ensure that the system adapts to different operation scenarios.

In general, the sensor module can provide accurate input data to the control system by acquiring data of light intensity, temperature and humidity in real time, so as to ensure that the control system responds effectively. As an alternative, the sensor module can include a plurality of different types of sensors, such as a spectral sensor, a temperature and humidity sensor, and the like, which operate together to provide comprehensive environmental information.

In a possible implementation, the light intensity sensor is configured to monitor the environmental light intensity, and the temperature and humidity sensor is configured to detect the temperature and humidity around the light source. Through an output signal of the sensor, the control system can dynamically calculate the power output of the light source required in the current environment, and then accurately adjust the light source.

In this embodiment, the light intensity sensor is configured to monitor changes of the light intensity in the environment. The sensor is generally a photodetector or a similar optical sensor, which can measure the environmental light intensity in real time and transmit the data to the signal processing module. Specifically, the output of the light intensity sensor may be expressed as:
${I}_{env} = f \left({L}_{env}, t, {T}_{env}\right) ;$
where Iₑₙᵥ denotes the environmental light intensity, Lₑₙᵥ denotes brightness of the environmental light source, t denotes time, and Tₑₙᵥ denotes the environmental temperature. The functional relationship can be modeled according to characteristics of the light intensity sensor and provide input data for the subsequent control of the system.

In some embodiments, the light intensity sensor may obtain a light intensity value periodically or in real time, and transmit the data to the system at a certain frequency for real-time feedback. An output signal of the sensor may be transmitted to the signal processing module in a form of digital or analog signals. The specific data transmission frequency and accuracy may be set according to different application scenarios. In general, the data acquisition frequency is several times per second to ensure real-time response.

The temperature and humidity sensor is configured to monitor temperature and humidity in the environment in order to provide necessary environmental data to the control system. These data are crucial for ensuring stable operation and performance of the light source, and especially in the environment with significant temperature and humidity changes, the function of the sensor module is particularly critical.

In some embodiments, the temperature and humidity sensor can be configured as an independent device or integrated with the light intensity sensor in the same module. The temperature and humidity data may be expressed by the following formula:
${T}_{env} = f \left({temp}_{sensor}, t\right) ;$
${H}_{env} = f \left({humidity}_{sensor}, t\right) ;$
where Tₑₙᵥ denotes environmental temperature, Hₑₙᵥ denotes environmental humidity, tempₛₑₙₛₒᵣ and humidityₛₑₙₛₒᵣ denote output signals of the temperature and humidity sensor, respectively, and t denotes time.

These temperature and humidity data provide an important reference for the current adjustment of the light source. The control system can adjust the current output of the light source according to the real-time temperature and humidity data to avoid overheating of the light source or power loss due to excessive temperature. In addition, the data of the temperature and humidity sensor can also be used in an early warning system to remind users of the possible degradation of light source performance in extreme environmental conditions.

All output signals (light intensity, temperature, humidity, and the like) of the sensor module may be transmitted to the signal processing module through a data bus or other communication methods. In this embodiment, the sensor module usually uses a digital signal output mode to improve accuracy and stability of data transmission. The signal processing module processes the received data and then transmits the data to the optimization calculation unit to form the final adjustment signal.

In an actual implementation, the data acquisition frequency of the sensor module can be adjusted according to the specific application. For example, in a scenario where high-precision response is required, the sampling frequency can be set to more than 10 times per second to ensure that the system can adapt to environmental changes quickly. In a scenario where the real-time requirement is not high, the sampling frequency can be reduced appropriately to reduce the burden of data processing.

The sensor module in this embodiment usually uses an integrated design. A plurality of sensors (such as a light intensity sensor and a temperature and humidity sensor) are integrated in one module. The module transmits data to the signal processing unit in the system through a bus or a wireless transmission method. In some embodiments, the sensor module can perform data transmission with a main control system through a wireless communication protocol (such as Bluetooth, Zigbee, and the like). The wireless transmission method can simplify wiring, improve flexibility of the system, and effectively reduce a wiring workload, especially in a scenario where a plurality of light source control systems need to be arranged.

As an alternative, the sensor module is not limited to a light intensity sensor and a temperature and humidity sensor, and can further include other types of sensors. For example, a CO₂ concentration sensor can be added. Theses sensors can provide more comprehensive environmental data and further optimize a control strategy of light sources, especially in application scenarios where gas concentration needs to be controlled for plant growth. Specifically, the sensor module can also integrate an air pressure sensor, a PM2.5 sensor, and the like to meet different application requirements.

In a possible implementation, digital processing may be performed on the output signal of the sensor module by an Analog-to-Digital Converter (ADC), and then the output signal is sent to a central processing unit of the system by a communication bus. Specific signal acquisition and data processing methods may be flexibly adjusted according to a type of the sensor and an operating condition.

In this embodiment, the signal processing module is configured to receive the environmental data output by the sensor module and process these data. The processed data may be transmitted to the optimization calculation unit to generate an adjustment signal according to a predetermined control strategy. A main task of the signal processing module is to preprocess and further analyze the data from a sensor such as a light intensity sensor and a temperature and humidity sensor, and provide accurate input to other modules of the system. The design of the module can ensure accuracy of the sensor data and effectively transmit the processed signal to the subsequent processing steps.

In general, the signal processing module processes the sensor data, including two steps: the first step is to perform basic data processing on the sensor output signal, such as filtering, denoising and normalization; and a second step is to further analyze these preprocessed data through a specific algorithm, so as to extract useful information and generate an adjustment signal. A core function of the signal processing module is to ensure stability and reliability of input data, thereby directly influencing control accuracy and a response speed of the entire system.

As an alternative, the signal processing module can use different algorithms to process the sensor data. For example, a Bayesian adaptive algorithm can be used to dynamically adjust a control strategy of the system according to environmental changes, thereby improving robustness and adaptability of the system. In some embodiments, the signal processing module can also perform weighted calculation on the temperature and humidity data, thereby preventing some sensor data from causing excessive interference to the system control.

In this embodiment, a first function of the signal processing module is to preprocess the sensor data. A main task of data preprocessing is to filter and normalize a raw sensor signal. A goal of filtering is to remove noise in the signal and ensure that the data processed by the system is clean and accurate. Normalization operation is to convert the data of different sensors into a unified scale for better comparison and analysis in the subsequent process.

In some embodiments, data preprocessing includes the following steps.

Signal filtering: a low-pass filter or a Kalman filtering algorithm is used to remove highfrequency noise.

Data normalization: the data output by the sensor is adjusted in proportion, so that the data falls within a predetermined range. The normalization formula may be expressed as:
${X}_{norm} = \frac{{X}_{raw} - {X}_{min}}{{X}_{max} - {X}_{min}} ;$
where X_{raw} denotes the raw sensor data, Xₘᵢₙ and Xₘₐₓ denote minimum and maximum values of the sensor data, respectively, and Xₙₒᵣₘ denotes the normalized data.

In a data preprocessing process, many algorithms and methods can be used, and the specific selection depends on data characteristics of sensors and requirements of the system.

After data preprocessing, the signal processing module may further analyze the processed data and generate an adjustment signal according to analysis results. The adjustment signal is generated based on a data format required by the optimization calculation unit, which usually needs to be calculated according to a target control function. The optimization calculation unit may adjust the current output of the light source based on an objective function such as minimizing power consumption or maximizing energy efficiency of the light source.

In some embodiments, the signal processing module can also dynamically adjust a strategy of the control system through a Bayesian adaptive algorithm. Specifically, the Bayesian adaptive algorithm can use sensor data to update probability distribution of a system state in real time, and generate a corresponding adjustment signal according to the distribution. The updated formula of the Bayesian adaptive algorithm is as follows:
$P \left(θ\left|D\right.\right) = \frac{P \left(D\left|θ\right.\right) P \left(θ\right)}{P \left(D\right)} ;$
where θ denotes a parameter of the control system, D denotes sensor data, P(θ|D) denotes posterior probability of the parameter under the given data, P(θ|D) denotes a likelihood function, P(θ) denotes prior distribution, and P(D) denotes the evidence.

In another possible implementation, the signal processing module can also perform weighted averaging calculation on data. For example, when a plurality of sensors operate together, the data can be weighted according to accuracy and stability of the sensors, so as to ensure that the control system may not generate a wrong control signal because of abnormal data of a specific sensor. The calculation formula of weighted averaging is:
${X}_{weighted} = \frac{{\sum }_{i = 1}^{n} {w}_{i} {X}_{i}}{{\sum }_{i = 1}^{n} {w}_{i}} ;$
where Xᵢ denotes the data of an i-th sensor, wᵢ denotes a corresponding weight, and X_{weighted} denotes the weighted data.

The data processed by the signal processing module may be transmitted to the optimization calculation unit through a signal transmission line for further calculation and decision. In a transmission process, the signal processing module can use a digital or analog signal transmission method, and the specific selection depends on hardware requirements of the system. In some embodiments, in order to improve stability and anti-interference ability of the system, an error detection and correction algorithm may be used in a signal transmission process to ensure integrity and accuracy of data.

In a possible implementation, the signal processing module may also make dynamic feedback adjustment according to the received adjustment signal. If deviation of the system is detected, the signal processing module can adjust some parameters in a data processing process to ensure that the finally generated adjustment signal meets the requirements of the system.

As an alternative, a function of the signal processing module may be expanded according to specific requirements. For example, a specific signal processing algorithm or module may be added to the signal processing module according to changes of the actual application scenario, thereby further improving accuracy and efficiency of data processing. Expansibility and flexibility of the signal processing module are important features in this embodiment.

In some embodiments, a calculation process of the signal processing module may be achieved by an embedded system, a Field-Programmable Gate Array (FPGA) or a microprocessor to ensure high-speed and low-power processing capability. Selection of these computing devices may be customized according to specific requirements of the system in order to maximize efficiency of the system.

In this embodiment, a main function of the optimization calculation unit is to calculate a current output signal suitable for the current environmental conditions according to the preprocessing data (for example, information such as light intensity, temperature and humidity) provided by the signal processing module. The unit adjusts the current of the COB light source in real time through the optimization algorithm to ensure that brightness and color temperature of the light source reach a predetermined target, taking into account energy efficiency of the system and a service life of the light source. The optimization calculation unit is one of the core parts of the control system, which directly influences operation efficiency of the light source and stability of the control system.

In general, the optimization calculation unit optimizes the current output according to the objective function, so as to achieve a balance between energy conservation and maintenance of the optimal light source performance. In some embodiments, the optimization calculation unit uses an optimization control algorithm to adjust the current output value of the light source in combination with current environmental data, such as light intensity, temperature and humidity. As an alternative, the objective function of the optimization calculation unit may be calculated based on multi-objective optimization of minimizing power consumption, maximizing energy efficiency of the light source or prolonging a service life of the light source.

In a possible implementation, the optimization calculation unit calculates the optimal current output through the following steps: first, environmental variables are quantified according to the real-time data provided by the sensor module; and then, an optimal current value is derived by a predetermined optimization algorithm in combination with the objective function.

In this embodiment, the objective function of the optimization calculation unit is mainly to optimize the current output according to actual use requirements. Specifically, the objective function may include the following aspects:

Minimizing power consumption: power consumption is an important target in optimization calculation. In general, power consumption may be expressed by a power formula:
$P = V \times I ;$
where P denotes a power, V denotes a voltage, and I denotes a current. In the application of the multi-spectral COB light source, in order to ensure efficient use of energy, the optimization calculation unit should minimize the current output in the case of meeting brightness requirements of the light source. The objective function can be designed as:
${F}_{energy} = min \left({\sum }_{i = 1}^{n} {P}_{i}\right) ;$
where Pᵢ denotes the power of each LED, and n denotes the number of LEDs in the light source. By minimizing the total power consumption, energy efficiency can be maximized on the premise of ensuring brightness of the light source.

Maximizing energy efficiency of the light source: another important target is to improve brightness energy efficiency of the light source. In order to achieve the target, the optimization calculation unit needs to take into account the contribution of a light source of each wavelength. For example, the wavelengths of blue light, red light and ultraviolet light have different contributions to the overall brightness and color temperature. The optimization calculation unit needs to dynamically adjust the current output of the light source of each wavelength according to the environmental light intensity and the set color temperature target. An energy efficiency function may be expressed as:
${F}_{efficiency} = max \left({\sum }_{i = 1}^{n} {I}_{i} ⋅ {L}_{i}\right) ;$
where Iᵢ denotes the current output of each LED, Lᵢ denotes brightness of the light source of the corresponding wavelength, and n denotes the number of LEDs in the light source. The function ensures that each LED operates in the optimal operating state by maximizing the energy efficiency of the light source.

Prolonging a service life of the light source: in order to prolong the service life of the light source, the objective function should also take into account the influence of temperature and current on the service life of the LED. Excessive current may lead to heating of the LED, thereby shortening the service life. In view of this, the objective function of the optimization calculation unit should include introduction of the light source service life attenuation factor. Specifically, the service life of the LED can be estimated by the following formula:
${L}_{life} = f \left({I}_{avg}, {T}_{env}\right) ;$
where L_{life} denotes an expected service life of the light source, I_{avg} denotes an average current output of the LED, and Tₑₙᵥ denotes the environmental temperature. The relationship between the service life attenuation factor and the current and temperature may establish a model through experimental data to ensure that the current output minimizes attenuation of the light source.

In some embodiments, the optimization calculation unit uses an optimization algorithm such as a Lagrange multiplier method to solve the current output. The Lagrange multiplier method can find an optimal solution of the objective function under a constraint condition. During control of the light source, the constraint condition usually includes a parameter such as brightness, color temperature, and a light source service life. Therefore, an optimization process may be expressed in the following form:
$L \left({I}_{1},{I}_{2},…,{I}_{n},λ\right) = {F}_{energy} + λ ⋅ \left({\sum }_{i = 1}^{n} {I}_{i} ⋅ {L}_{i} - {L}_{target}\right) ;$
where 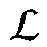 denotes a Lagrange function, λ denotes a Lagrange multiplier, and L_{target} denotes target brightness.

By solving a Lagrange equation, the optimal current output of the light source of each wavelength can be obtained, thereby achieving optimization control of the multi-spectral light source.

In this embodiment, optimal current output results calculated by the optimization calculation unit according to the objective function are transmitted to the feedback control unit to generate a final adjustment signal. The adjustment signal may be transmitted to the intelligent control module to further adjust the current output of each LED. In the implementation process, the real-time calculation capability of the optimization calculation unit ensures that the system can quickly adapt to environmental changes and make accurate adjustment.

In some embodiments, the optimization calculation unit can also dynamically adjust the calculation process according to changes of the external environment (such as temperature rise, light change, and the like). In this way, the optimization calculation unit can continuously optimize energy efficiency of the system, brightness and long-term stability of the light source.

As an alternative, the optimization calculation unit can customize the optimization algorithm according to different application scenarios. For example, in some occasions where energy efficiency requirements are high, the optimization calculation unit can use a genetic algorithm or a particle swarm optimization algorithm to further improve accuracy and efficiency of the current output. In this case, the optimization calculation process can be more flexible and meet more complex requirements.

In addition, a calculation load of the optimization calculation unit can improve the processing speed by hardware acceleration (such as using a dedicated processing unit and a Graphics Processing Unit (GPU)), and especially in a large-scale light source system, the acceleration method can significantly improve the response speed of the system.

In this embodiment, a feedback control unit plays an important role in the entire control system, and is responsible for adjusting the current output of the multi-spectral integrated COB light source in real time according to the adjustment signal generated by the foregoing modules (such as the signal processing module and the optimization calculation unit). The feedback control unit not only responds to data changes of an external sensor, but also performs dynamical compensation according to a control strategy to ensure that performance of the light source is always maintained at an optimal level. Through the real-time closed-loop control, the feedback control unit can effectively cope with changes of environmental conditions, and ensure adaptability of brightness, color temperature and energy efficiency of the light source in various application scenarios.

In general, the feedback control unit accurately controls the output current according to the adjustment signal from the optimization calculation unit. A common control method, such as a PID control method and a fuzzy control method, is used in the control process to adjust the operating state of the light source according to environmental changes. Through the feedback mechanism, the control system can automatically detect and correct the output current after each adjustment to avoid potential overshoot or hysteresis. Specifically, the design of the feedback control unit can improve dynamic responsiveness of the system and ensure that each operating parameter can respond to the environmental changes accurately and quickly.

As an alternative, the feedback control unit can use a PID control algorithm, which usually includes three parts: proportional, integral and derivative, and can effectively adjust the current output of the light source to meet the changing environmental requirements. In other implementations, the feedback control unit can also combine the fuzzy control algorithm and the adaptive algorithm to further improve intelligence and adaptability of the system.

In this embodiment, the feedback control unit can use a classical PID control algorithm to adjust the current output of the COB light source. The PID control algorithm adjusts the control quantity (current output) by performing proportional, integral and derivative operations on errors. The core idea of the PID control algorithm is to adjust the current output according to the error between a current state and a target state of the light source, so that errors gradually decrease to reach a set target value.

Specifically, the output signal of the PID controller may be expressed as:
$U \left(t\right) = {K}_{p} e \left(t\right) + {K}_{i} {\int }_{0}^{t} e \left(τ\right) dτ + {K}_{d} \frac{de \left(t\right)}{dt} ;$
where U(t) denotes a control signal, e(t) denotes a current error, Kₚ, Kᵢ and K_{d} denote proportional, integral and derivative coefficients, respectively, t denotes the time, and τ denotes an integral variable. Each term in the formula corresponds to a proportional term, an integral term and a derivative term, which are used to control a current error, a cumulative error and an error change rate, respectively. In this way, the PID control algorithm can respond to environmental changes immediately.

In general, the proportional term in the PID controller determines a response speed of the system, the integral term helps to eliminate a steady-state error, and the derivative term can predict an error trend and make appropriate pre-compensation for the system response. In order to ensure stability of the system, parameters (Kₚ, Kᵢ, K_{d}) of the PID controller usually need to be adjusted according to the actual requirements.

In addition to the PID control algorithm, the feedback control unit can also use a fuzzy control algorithm to deal with nonlinear and complex control problems. The fuzzy control algorithm makes decisions through rule reasoning and fuzzy sets without an accurate mathematical model. The fuzzy control algorithm has an advantage of adapting to the changing environment, and especially in the case of incomplete or fuzzy sensor data, can still provide a good control effect.

The basic idea of the fuzzy control algorithm is to map an input signal (such as temperature, light intensity, and the like) to an output signal (that is, current output) by defining a set of fuzzy rules. Each fuzzy rule may be expressed in the form of "If ...... then ......". Specifically, the workflow of the fuzzy controller includes the following steps.

Fuzzification: an input variable (such as sensor output) is converted into a fuzzy value.

Reasoning: the control output is reasoned according to the fuzzy rules.

De-fuzzification: an inference result is converted into an actual control output signal.

In some embodiments, the fuzzy controller may be combined with the adaptive control algorithm to further enhance the self-adjustment ability of the system in different environments. The goal of the adaptive control is to adjust control parameters according to real-time performance of the system, so as to maintain stability and efficiency of the system in long-term operation.

In this embodiment, the feedback control unit generates a new current adjustment signal according to the adjustment signal provided by the optimization calculation unit and the environmental data acquired in real time. Through the PID control algorithm or the fuzzy control algorithm, the feedback control unit continuously adjusts the current output of the light source to ensure that brightness and color temperature of the light source are within the set range. The adjustment signal is transmitted to the intelligent control module through a communication interface, and finally, the COB light source can be controlled accurately.

In some embodiments, the feedback control unit can also exchange data with other control modules through a bidirectional communication mechanism. For example, the feedback control unit can receive data from other light sources or systems, so as to adjust the output of the light source according to the global environment. In addition, the feedback control unit can also perform real-time diagnosis and fault detection to ensure safe operation of the system.

Another important function of the feedback control unit is to ensure real-time responsiveness and robustness of the system. In the dynamic environment, a factor such as temperature, humidity and light intensity may change continuously. The feedback control unit must be able to respond quickly and accurately. In some embodiments, the calculation speed and the response time of the control unit are improved by the optimization algorithm and the hardware acceleration.

Specifically, the feedback control unit can ensure the response speed to the input signal and stability of the system through gain adjustment and error suppression technologies. For example, in a current adjustment process, if the sensor data fluctuates, the feedback control unit can adjust the current output in real time according to the algorithm to avoid over-response or imbalance.

As an alternative, the feedback control unit can be extended according to the actual application requirements. For example, in a higher-precision light source control system, the feedback control unit may be combined with a machine learning algorithm to continuously optimize the control strategy through historical data, so as to improve adaptability and control accuracy of the system. In addition, the feedback control unit can also be linked with an external device (such as a temperature control system, a fan controller, and the like) to achieve accurate control of the light source and the entire system.

In some embodiments, the feedback control unit may be integrated in a main control module of the system to reduce the number of external hardware devices and improve integration and reliability of the system.

The intelligent control module in this embodiment is a core component of the control system of the multi-spectral integrated COB light source, and is responsible for receiving signals from the feedback control unit, the optimization calculation unit and the sensor module, and making decisions and adjustment according to real-time environmental data. The intelligent control module not only can support coordinated operation among the modules, but also can adjust the brightness, the color temperature and the power output of the light source according to different environmental conditions and user requirements, thereby achieving accurate control of the light source. The design of the intelligent control module ensures that the system can achieve adaptive adjustment in a dynamic environment to maintain stability, energy efficiency and long-term operation reliability of the light source.

In general, the intelligent control module adjusts the current output of the light source based on the target value provided by the optimization calculation unit in combination with the environmental data acquired in real time to ensure that the light source can maintain the optimal operating state under various changing conditions. As an alternative, the intelligent control module includes a quantum optical control unit, which can accurately control the power output of the light sources of each wavelength and optimize a lighting effect of the system by adjusting a phase difference of light sources of different wavelengths.

In a possible implementation, the intelligent control module not only controls the light source through direct signal transmission, but also has specific prediction ability. The intelligent control module can predict environmental changes based on the historical data and the algorithm, and adjust the operating state of the light source in advance to improve the response speed and stability of the system.

In this embodiment, the intelligent control module includes a quantum optical control unit, which is specially used to adjust the power output of the LED light sources of different wavelengths in the multi-spectral light source. The operating principle of the quantum optical control unit is based on a quantum interference effect and quantum entanglement, and the power distribution is optimized by adjusting the phase difference of light sources of different wavelengths. Specifically, the quantum optical control unit can adjust the power of the light source of each wavelength by the following formula:
${P}_{{λ}_{i}} = A ⋅ cos \left({Δϕ}_{i}\right) ;$
where P_{λᵢ} denotes the power of the light source corresponding to the wavelength λᵢ, A denotes the total power of the light source, and Δϕᵢ denotes the phase difference of the wavelength λᵢ. By accurately controlling the phase difference of each wavelength, the quantum optical control unit can allow the light source of each wavelength to output the maximum energy where appropriate, thereby improving the overall energy efficiency of the light source and the lighting quality.

In some embodiments, the quantum optical control unit can also adjust the phase difference in real time based on light intensity data of the light source, sensor feedback and other environmental parameters, so as to meet environmental changes or different requirements of application scenarios.

In this embodiment, one of the cores of the intelligent control module is an adaptive adjustment mechanism. The mechanism can automatically adjust the output power and the color temperature of the light source according to the real-time operating state and environmental changes. Specifically, the intelligent control module decides whether to adjust the current output of the light source by obtaining real-time data (such as environmental light intensity, temperature, humidity, and the like) provided by the sensor module and combining the target value generated by the optimization calculation unit.

In some embodiments, the intelligent control module can adjust operating parameters of the light source in real time by using the multi-objective optimization algorithm according to requirements set by users (such as preset brightness, color temperature, and the like) and the information fed back by a sensor. This process can ensure that the light source always maintains an optimal operating condition under changing environmental conditions.

For example, considering application requirements of plant growth lighting, the intelligent control module adjusts a ratio of blue light to red light in real time according to sensor data (such as light intensity, temperature and humidity around plants) to improve growth efficiency of plants. If the system detects that the temperature is too high or the humidity is too low, the intelligent control module may automatically adjust the output of the light source to avoid failure of the light source or restriction of plant growth due to overheating.

In order to ensure that the system can keep stable under different conditions, the intelligent control module uses a plurality of control algorithms, including but not limited to a rule-based fuzzy control algorithm, a PID control algorithm and a machine learning algorithm. These control algorithms dynamically adjust the current output of the light source by continuously analyzing the input data and the target parameter.

Specifically, the PID control algorithm is used to adjust the real-time response of the system to ensure that the light source can respond quickly and make appropriate adjustment when the environmental light or temperature and humidity change. The fuzzy control algorithm is suitable for dealing with uncertain or fuzzy data in the system, and especially in the case of incomplete sensor data or noise, the fuzzy control algorithm can reason the control signal based on fuzzy rules, thereby ensuring the stable operation of the system.

In a possible implementation, the intelligent control module may also be combined with the machine learning technology to predict future light source requirements by analyzing historical data, and adjust the current output in advance. The prediction adjustment method based on historical data can further improve the response speed of the light source and reduce errors due to environmental changes.

The intelligent control module is not only an independent module, but also has close data interaction with other control system modules. For example, the adjustment signal from the feedback control unit and the target current output data provided by the optimization calculation unit may both be processed by the intelligent control module and fed back to the light source. Through a closed-loop feedback mechanism, the intelligent control module can ensure that the system always operates within a set operating range, and perform real-time optimization according to changes of the external environment.

In some embodiments, the intelligent control module may also interact with an external device through a wireless communication technology. For example, through a mobile phone application or a computer interface, users may view the operating state of the light source in real time and adjust the parameters as needed. Through a remote control function, the intelligent control module enhances user-friendliness and flexibility of the system.

As an alternative, the intelligent control module can be connected with other intelligent devices or Internet of Things (IoT) devices to achieve a wider range of control and management. For example, in construction of smart cities, the intelligent control module can be linked with an urban lighting system to automatically adjust brightness of street lights and reduce power consumption. In agricultural production, the intelligent control module can automatically adjust the light source according to lighting requirements of crops to maximize a growth effect of plants.

In some embodiments, the intelligent control module can also perform customized settings according to different application scenarios (such as commercial lighting, office lighting, and the like), and provide a plurality of preset modes to meet requirements of different users.

Although embodiments of the present disclosure have been shown and described, it will be understood by those skilled in the art that various changes, modifications, substitutions and variations can be made to these embodiments without departing from the principle and the spirit of the present disclosure. The scope of the present disclosure is defined by the appended claims and their equivalents.

## Claims

1. A multi-spectral integrated Chip-on-Board (COB) light source, comprising light-emitting diodes, wherein the light-emitting diodes are light sources of different wavelengths, comprising ultraviolet light, blue light and red light, the light-emitting diodes are uniformly arranged on a double-sided ceramic circuit board in a ring shape, a current output of the multi-spectral integrated COB light source is adjusted by an intelligent control module, and the intelligent control module adjusts a current output of the light-emitting diode according to real-time sensor data to adjust brightness and color temperature of the light source.

2. A control system of a multi-spectral integrated Chip-on-Board (COB) light source, dependent on the multi-spectral integrated COB light source according to claim 1, wherein the control system comprises:
a sensor module, which is configured to acquire environmental light intensity and temperature and humidity data;
a signal processing module, which is configured to process the sensor data;
an optimization calculation unit, which is configured to generate an adjustment signal according to the processed data;
a feedback control unit, which is configured to adjust a current output of the multi-spectral integrated COB light source according to the adjustment signal; and
an intelligent control module, which comprises a quantum optical control unit, wherein the quantum optical control unit adjusts an output power of a light source of each wavelength by adjusting a phase difference of the light sources of different wavelengths.

3. The control system of the multi-spectral integrated COB light source according to claim 2, wherein the signal processing module comprises a data preprocessing unit and a Bayesian adaptive algorithm unit,
the data preprocessing unit is configured to filter and normalize the sensor data, and
the Bayesian adaptive algorithm unit updates probability distribution of a system state in real time according to the processed data to generate an adjustment signal.

4. The control system of the multi-spectral integrated COB light source according to claim 2, wherein the optimization calculation unit calculates a current output of the light source according to an optimization control algorithm, and the optimization control algorithm performs current adjustment based on an objective function of minimizing power consumption and meeting requirements of light color and brightness.

5. The control system of the multi-spectral integrated COB light source according to claim 2, wherein the optimization calculation unit is configured to perform the following steps:
generating a constraint condition based on a preset light color parameter and a brightness parameter; and
taking minimizing power consumption as the objective function, solving an optimal current value of the light source of each wavelength by using a Lagrange multiplier method.

6. The control system of the multi-spectral integrated COB light source according to claim 5, wherein a light source service life attenuation factor is introduced into the objective function, and the attenuation factor is associated with current intensity and temperature and humidity data.

7. The control system of the multi-spectral integrated COB light source according to claim 2, wherein the feedback control unit comprises a fuzzy control module and a Proportional-Integral-Derivative (PID) control module,
the fuzzy control module generates a preliminary adjustment signal based on sensor data, and
the PID control module performs dynamic compensation on the preliminary adjustment signal.

8. The control system of the multi-spectral integrated COB light source according to claim 7, wherein a proportional coefficient, integral time and derivative time of the PID control module are adjusted by using an adaptive algorithm, and are automatically adjusted according to temperature and humidity of an actual operating environment and sensor data to ensure stability of the system and a long-term stable output of the light source.

9. The control system of the multi-spectral integrated COB light source according to claim 2, wherein the quantum optical control unit comprises:
a phase modulator, which is configured to adjust a phase difference of light sources of different wavelengths;
a quantum interference detection unit, which is configured to monitor interference intensity of a light source of each wavelength; and
a power divider, which is configured to adjust an output power of a light source of each wavelength based on the interference intensity.

10. The control system of the multi-spectral integrated COB light source according to claim 2, wherein the sensor module comprises:
a spectral sensor, which is configured to monitor spectral distribution of environmental light at a sampling frequency of 10 times per second;
distributed temperature sensors, which are uniformly distributed along an edge of a double-sided ceramic circuit board; and
a humidity sensor, which is integrated in a light source housing.
